# EUROPÄISCHE PATENTANMELDUNG

(11) **EP 0 872 677 A2**
(43) Veröffentlichungstag der Anmeldung: **21.10.1998**
(21) Anmeldenummer: 98201243.7
(22) Anmeldetag: 17.04.1998
(51) Int. Cl.: F16L 3/10

(54) **Rohrschelle**

(30) Priorität: 17.04.1997 DE 29706912 U
(71) Anmelder: J. van Walraven B.V., NL-3641 RK Mijdrecht (NL)
(72) Erfinder: van Walraven, Jan, 3641 GP Mijdrecht (NL)
(74) Vertreter: Brookhuis, Hendrik Jan Arnold

(57) **Zusammenfassung**

Eine Schelle (1,2) zum Befestigen eines Rohres oder dergleichen an einer Wand, einer Decke oder einer anderen Unterstützung. Die Rohrschelle hat einen Schellenkörper zum Umschließen eines Rohres, wobei der Schellenkörper eine von seinem ersten und seinem zweiten freien Ende begrenzte Öffnung aufweist, um den Schellenkörper um das Rohr anzuordnen. Weiter ist eine schwenkbare Verbindungsanordnung (3) zum lösbar Miteinanderverbinden der freien Enden vorgesehen. Diese Verbindungsanordnung ist beim ersten freien Ende des Schellenkörpers mit einer Befestigung des Schellenkörpers verbunden.

In einem Abstand zu der Befestigung hat die Verbindungsanordnung ein Greifelement, das eine Auflagefläche eines beim zweiten freien Ende des Schellenkörper vorgesehenen Auflagers hintergreifen kann.

Die Rohrschelle (1,2) ist in solcher Weise ausgebildet, daß beim Aufeinanderzubewegen der freien Enden des Schellenkörpers, die sich in ihrem Passierstand befindende Verbindungsanordnung von dem zweiten freien Ende des Schellenkörpers bedienbar ist und dadurch von dem Passierstand in den Verbindungsstand schwenken kann, so daß das Greifelement der Verbindungsanordnung die Auflagefläche hintergreifen kann.

## Beschreibung

Die vorliegende Erfinding bezieht sich auf eine Rohrschelle zum Befestigen eines Rohres, einer Leitung oder dergleichen an einer Wand, einer Decke oder einer anderen Unterstützung nach dem Oberbegriff des Anspruchs 1.

Aus EP 0 344 862, EP 0 387 967, EP 0 534 518 und EP 0 512 654 sind Schellen des in dem Oberbegriff beschriebenen Typs bekannt. Bei diesen bekannten Rohrschellen ist der Schellenkörper mit einem Kuppelorgan, oft einer Mutter, versehen, um den Schellenkörper an der Wand, der Decke oder einer anderen Unterstützung anordnen zu können. Bei diesen bekannten Schellen umfaßt die Verbindungsanordnung einen Schraubenbolzen, der in ein zugehöriges Stützteil geschraubt worden ist. Das Stützteil ist dabei an einem an dem ersten freien Ende angeordneten ersten Flansch angeordnet, oder stützt sich gegen den ersten Flansch beim Zueinanderziehen der freien Enden. Das Stützteil ist dabei in solcher Weise ausgeführt, daß der Schraubenbolzen gegenüber dem Schellenkörper zwischen dem Passierstand, in dem ein an dem zweiten freien Ende angeordneter zweiter Flansch den Kopf des Schraubenbolzens passieren kann, und dem Verbindungsstand, in dem der Schraubenbolzen im wesentlichen rechtwinklig auf die beiden Flanschen gerichtet ist, schwenken kann, und der Bolzenschaft in einem Schlitz in dem zweiten Flansch liegt, wobei der Bolzenkopf den zweiten Flansch hintergreift. Bei diesen bekannten Schellen ist das Stützteil federnd ausgeführt, so daß bei dem Zueinanderschwenken der Schellenteile der zweite Flansch gegen den Bolzenkopf stößt und dieser Bolzen dadurch gegen die Federkraft des Stützteils seitlich weggedrückt wird, wonach der Bolzen unter Einfluß der Federkraft wieder zurückschwenkt, sobald der zweite Flansch den Bolzenkopf passiert ist, und der Bolzenschaft in den zugehörigen Schlitz in dem zweiten Flansch gelangen kann. Dadurch, daß nun der Bolzenkopf den zweiten Flansch hintergreift, sind die beiden freien Enden des Schellenkörpers provisorisch miteinander verbunden. Anschließend werden der erste und der zweite Flansch durch ein Anziehen des Schraubenbolzens zueinandergezogen.

Die obengenannten bekannten Lösungen, um das Schwenken der Verbindungsanordnung zu bewirken, sind völlig auf die federnde Wirkung des Stützteils gegründet, was eine Anzahl Nachteile hat. So ist bei einer Anzahl bekannter Schellen die Federkraft des Stützteils gering, einerseits um die Montage der Schelle um das Rohr zu erleichtern und andererseits um eine billige Ausführung des federnden Stützteils zu ermöglichen. Hierdurch kann es leicht passieren, daß der Schraubenbolzen unbeabsichtigt aus dem für die provisorische Befestigung notwendigen Verbindungsstand in den Passierstand schwenkt und die Schelle wieder offen ist. Andere bekannte Lösungen der federenden Stützteile für den Schraubenbolzen sind dagegen komplex in der Konstruktion und dadurch unerwünscht aufwendig.

Der vorliegenden Erfindung liegt deshalb die Aufgabe zugrunde, eine alternativ ausgeführte Schelle zur Befestigung eines Rohres, einer Leitung oder dergleichen zu schaffen, mit der obengenannte Probleme aufgehoben werden können.

Nach deren erstem Aspekt schafft die vorliegende Erfindung eine Rohrschelle nach dem Oberbegriff des Anspruchs 1, wobei die Schelle in solcher Weise ausgebildet ist, daß beim Aufeinanderzubewegen der freien Enden des Schellenkörpers die sich in ihrem Passierstand befindende Verbindungsanordnung von dem zweiten freien Ende des Schellenkörpers bedient wird und dadurch von dem Passierstand in den Verbindungsstand schwenkt, so daß das Greifelement der Verbindungsanordnung die Auflagefläche hintergreift.

Vorzugsweise ist die Verbindungsanordnung so ausgeführt, daß der Abstand zwischen dem Greifelement und der Befestigung verringert werden kann, um beide durch die Verbindungsanordnung miteinander verbundene freie Enden zueinanderzuziehen. In einer praktisch vorteilhaften Ausführung umfaßt die Verbindungsanordnung einen Schraubenbolzen und ein zugehöriges Stützteil, in den der Schraubenbolzen geschraubt worden ist, welches Stützteil über die Befestigung schwenkbar an dem ersten freien Ende des Schellenkörpers befestigt ist. Hierbei kann dann der Kopf des Schraubenbolzens das Greifelement bilden. Mit Vorteil wirkt dabei das Stützteil mit dem zweiten freien Ende des Schellenkörpers zum Schwenken des Schraubenbolzens in den Verbindingsstand zusammen.

Vorzugsweise is die Zusammenwirkung zwischen dem zweiten freien Ende des Schellenkörpers und der Verbindungsanordnung so, daß die Verbindungsanordnung beim Schließen der Schelle in einem möglichst frühen Stadium in den Verbindungsstand gebracht wird, das heißt, sobald ein gegenseitiger Stand der freien Enden, in dem das Greifelement der Verbindungsanordnung die Auflagefläche des Auflagers hintergreifen kann, erreicht ist.

Bei der Schelle nach dem ersten Aspekt der Erfindung wird die Schwenkung der Verbindungsanordnung also hauptsächlich dadurch realisiert, daß das zweite freie Ende des Schellenkörpers mit der an dem ersten freien Ende befestigten Verbindungsanordnung in Berührung kommt, wobei infolge der fortschreitenden Aufeinanderzubewegung der freien Enden das zweite freie Ende eine Kraft auf die Verbindungsanordnung ausübt, die derart ist, daß dadurch die Verbindungsanordnung von dem Passierstand in den Verbindungsstand schwenkt.

Vorzugsweise sind die Verbindungsanordnung und das zweite freie Ende des Schellenkörpers in solcher Weise ausgeführt, daß es zumindestens während des in den Passierstand Schwenkens der Verbindungsanordnung eine formschlüssige Zusammenwirkung zwischen dem zweiten freien Ende und der Verbindungsanordnung gibt, so daß die Verbindungsanordnung dazu gezwungen wird, in den Verbindungsstand zu schwenken.

Als Alternative würde eine Reibungskupplung vorgesehen sein können, welche Kupplungsart aber nicht garantiert, daß die Verbindungsanordnung auch tatsächlich schwenken wird.

In einer Ausführungsabwandlung der erfindungsgemäßen Rohrschelle wird die Schwenkbewegung der Verbindungsanordnung in den Verbindungsstand von Federkraft unterstützt, welche Federkraft zum Beispiel durch eine geeignete federnde Ausführung des Stützteils für das damit verbundende Verbindungselement, wie einen Schraubenbolzen, erhalten wird.

In einer bevorzugten Ausbildung ist das zweite freie Ende des Schellenkörpers mit einem Bedienungsvorsprung versehen, der in Richtung auf das erste freie Ende unter dem Auflager, zum Beispiel dem zweiten Flansch, herausragt, und der mit der Verbindungsanordnung zum Schwenken dieser Verbindungsanordnung zusammenwirken kann.

Vorzugsweise sind Rastmittel vorgesehen, die den Bedienungsvorsprung an dem zu dem ersten freien Ende zugehörigen Teil des Schellenkörpers verriegeln, wenn die Verbindungsanordnung in den Verbindungsstand geschwenkt ist. Diese Rastmittel können formschlüssig auf dem Bedienungsvorsprung angreifen, zum Beispiel mit einem Nocken, der zwischen Rippen auf dem Bedienungsvorsprung angreift, aber ein kraftschlüssiger Angriff, zum Beispiel eine exzentrische Rolle, die einen glatten Bedienungsvorsprung festklemmt, ist zum Beispiel auch möglich.

Vorzugsweise sind der Schellenkörper und die Verbindungsanordnung mit zusammenwirkenden Rastmitteln versehen, die die Verbindungsanordnung in ihrem Verbindungsstand halten, sobald diese aus dem Passierstand in den Verbindungsstand geschwenkt ist. Vorzugsweise sind diese Rastmittel bei der Befestigung der Verbindungsanordnung vorgesehen. In einer möglichen Ausbildung ist das Stützteil für das Verbindungselement mit einer Öffnung versehen, durch die der Bedienungsvorsprung hindurchstecken kann, sobald die Verbindungsanordnung in den Verbindungsstand geschwenkt ist, so daß der Bedienungsvorsprung selbst die Verriegelung bewirkt. Insbesondere ist in einer derartigen Verriegelung der Verbindungsanordnung vorgesehen, daß die Einheit auch in dem Verbindungsstand gehalten wird, wenn sich das zweite freie Ende wieder ein Stück vom ersten freien Ende wegbewegt. Hierdurch ist sichergestellt, daß das zweite freie Ende sich nur innerhalb eines von dem Greifelement der Verbindungsanordnung bestimmten Bereichs vom ersten freien Ende wegbewegen kann, und die provisorische Verbindung der freien Enden dadurch sichergestellt ist.

In einer bevorzugten Ausbildung ist der Schellenkörper aus Metall und ist der Bedienungsvorsprung eine auf das erste freie Ende gerichtete metallene streifenartige Zunge, die beim Sichaufeinanderzubewegen der freien Enden mit dem Stützteil zum in den Verbindungsstand Schwenken des wie ein Schraubenbolzen oder dergleichen ausgeführten Verbindungselements zusammenwirken kann. Vorzugsweise ragt dabei die Zunge zumindestens über eine solche Länge heraus, daß das Verbindungselement durch die Zusammenwirkung der Zunge und des Stützteils in den Verbindungsstand geschwenkt wird, nahezu unmittelbar nachdem eine Position erreicht ist, in der das Greifelement die Auflagefläche hintergreifen kann.

In einer vorteilhaften Ausbildung ist beim ersten freien Ende des Schellenkörpers ein erster Flansch mit einer Öffnung vorgesehen, durch die der an dem zweiten freien Ende vorgesehene Bedienungsvorsprung beim Schließen der Schelle hindurchstecken kann. Vorzugsweise findet dabei der Angriff zwischen dem Bedienungsvorsprung und der Verbindungsanordnung in einem Abstand unter dem ersten Flansch statt, wodurch, das in die Öffnung Gelangen des Bedienungsvorsprungs zuerst eine gegenseitige Zentrierung der beiden freien Enden bewirkt, bevor die Schwenkbewegung der Verbindungsanordnung realisiert wird.

Mit Vorteil sind der Bedienungsvorsprung und die Verbindungsanordnung, in einer bevorzugten Ausbildung der letzteren, das Stützteil für den Schraubenbolzen, mit einer Verzahnung, zum Beispiel Querrippen auf dem Bedienungsvorsprung und zugehörigen Schlitzen oder Nocken auf dem Teil der Verbindungsanordnung, versehen. Hierdurch können diese Teile zum Beispiel nach Art eines Ritzels und einer Zahnstange zusammenwirken.

In einer anderen bevorzugten Ausführungsform der erfindungsgemäßen Schelle ist das schwenkbar in der Befestigung des Schellenkörpers gelagerte Stützteil für den Schraubenbolzen oder dergleichen mit einem in dem Passierstand des Schraubenbolzens auf das zweite freie Ende gerichteten Bedienungsvorsprung versehen, der beim Aufeinanderzubewegen der freien Enden mit dem zweiten freien Ende zusammenwirken kann um den Schraubenbolzen in den Verbindungsstand zu schwenken. Mit Vorteil ist dieser Bedienungsvorsprung in solcher Weise ausgeführt, daß die Schwenkung des Schraubenbolzens in den Verbindungsstand unmittelbar stattfindet, sobald dessen Kopf das Auflager an dem zweiten freien Ende hintergreifen kann.

In einer vorteilhaften Ausbildung ist der Bedienungsvorsprung unter Einfluß der Kraft, die bei dem mit der Verbindungsanordnung Zueinanderziehen der freien Enden der Flansche auf den Bedienungsvorsprung ausgeübt wird, in solcher Weise verformbar, daß der verformte Bedienungsvorsprung weniger Raum einnimmt. Der Bedienungsvorsprung kann zum Beispiel aus Federstahl sein und dermaßen stabil ausgeführt sein, daß er wirksam ist, um die Schwenkung der Verbindungsanordnung zu realisieren und anschließend flachgedrückt wird. Auch würde der Bedienungsvorsprung aus einem zusammendrückbaren Organ aus weichem Material, wie zum Beispiel Kunststoff oder Gummi bestehen können. Eventuell ist der Bedienungsvorsprung elastisch verformbar, aber es ist auch möglich, daß der Bedienungsvorsprung sich bei dem vollständigen Schließen der Schelle plastisch verformt. Auch ist es möglich, daß der Bedienungsvorsprung in verformtem Zustand eine Verriegelung der Verbindungsanordnung in dem Verbindungsstand realisiert, zum Beispiel, indem das verformte Teil des Vorsprungs sich in dem Raum zwischen dem Stützteil für den Schraubenbolzen und dem Schellenkörper einklemmt.

In einer anderen Ausbildung ist bei dem ersten freien Ende des Schellenkörpers ein Schieber vorgesehen, der gegenüber dem Schellenkörper verschiebbar ist und im vormontierten Zustand in Richtung auf das zweite freie Ende herausragt. Dabei wirkt der Schieber in solcher Weise mit dem schwenkbar an der Befestigung angeordneten Stützteil der Verbindungeinheit zusammen, daß beim Schließen der Schelle der Schieber von dem zweiten freien Ende des Schellenkörpers versetzt wird und dabei das Stützteil in solcher Weise bewegt, daß das Verbindungselement aus dem Passierstand heraus in den Verbindungsstand schwenkt. Vorzugsweise ist das Stützteil dabei rotierbar in der Befestigung gehalten und sind das Stützteil und der Schieber mit zusammenwirkenden Verzahnungsmitteln versehen, so daß das Versetzen des Schiebers eine Rotation des Stützteils und des damit verbundenen Verbindungselements bewirkt.

In einer bevorzugten Ausführungsform der Rohrschelle gemäß dem ersten Aspekt der Erfindung hat der Schellenkörper einen ersten und einen zweiten Flansch, beziehungsweise an dem ersten und dem zweiten freien Ende des Schellenkörpers, welche Flansche ab dem im wesentlichen kreisförmigen Schellenkörper herausragen. Durch eine Öffnung in dem ersten Flansch steckt ein Verbindungselement, zum Beispiel ein Schraubenbolzen, welches Verbindungselement an der von dem zweiten Flansch abgewandten Seite des ersten Flansches mit einem Stützteil für das Verbindungselement verbunden ist.

In einer Ausführungsabwandlung hat das Stützteil einen oberen Schenkel, der sich über die dem zweiten Flansch zugewandte Seite des ersten Flansches erstreckt, so daß das Stützteil zumindestens teilweise den ersten Flansch umgreift. Der obere Schenkel kann in solcher Weise ausgebildet sein, daß dieser in dem Passierstand des Vebindungselements in Richtung auf den zweiten Flansch herausragt und beim Schließen der Schelle von dem zweiten Flansch zum ersten Flansch gedrückt wird, wodurch das Stützteil eine Schwenkung des Verbindungselements in den Verbindungsstand bewirkt. Hierbei gelangt ein Greifelement des Verbindungselements, zum Beispiel der Bolzenkopf, in einen Schlitz, der in dem zweiten Flansch eingeformt ist. Ein unterer Schenkel dieses Stützteils erstreckt sich an der von dem zweiten Flansch abgewandten Seite des ersten Flansches und kann mit einer Öffnung mit einem Innengwinde für den Schraubenbolzen versehen sein, oder kann ein Mutterorgan festhalten, in das der Schraubenbolzen geschraubt ist. Vorzugsweise ist ein derartiges Stützteil aus Federstahl oder Kunststoff.

Vorteilhafte Ausbildungen und Vorteile der Rohrschelle gemäß dem ersten Aspekt der Erfindung sind in den Ansprüchen und der Beschreibung anhand der Zeichnung beschrieben.

Die vorliegende Erfindung bezieht sich weiter gemäß deren zweitem Aspekt auf eine Rohrschelle nach Anspruch 11. Gemäß diesem zweiten Aspekt der vorliegenden Erfindung wird eine zusätzliche Verbindung neben der Verbindung mit der schwenkbaren Verbindungsanordnung geschaffen, welche zusätzliche Verbindung mittels Verhakungsmittel realisiert wird. Hierdurch können die freien Enden zuerst provisorisch mit den Verhakungsmitteln und anschließend mit der Verbindungsanordnung verbunden werden. Hiermit wird das vorgenannte Problem des unbeabsichtigten Sichlösens der freien Enden des Schellenkörpers gelöst. Der zweite Aspekt der Erfindung ist insbesondere in Kombination mit einer Verbindungsanordnung anwendbar, wobei keine Federmittel, um die Verbindungsanordnung in den Verbindungsstand zu schwenken, vorgesehen sind, wie zum Beispiel aus der EP 0 643 247 bekannt ist. Dieser Gedanke ist aber auch in Kombination met einer Verbindungsanordnung vorteilhaft, bei der der Schraubenbolzen in ein federndes schwenkbares Stützteil, wie in der Einleitung beschrieben, geschraubt ist.

Vorzugsweise haken die Verhakungsmittel beim Schließen der Schelle automatisch aneinander, sobald ein gegenseitiger Stand erreicht ist, in dem das Greifelement das Auflager beim zweiten freien Ende hintergreifen kann.

Der Schellenkörper der erfindungsgemäßen Rohrschelle kann mit zwei separaten Schellenhälften ausgeführt sein, die an einer Seite über eine anlenkbare Verbindung miteinander verbunden sind und an der anderen Seite mit der erfindungsgemäßen Verbindung versehen sind. Die anlenkbare Verbindung kann zum Beispiel aus einer geeigneten Verhakungsverbindung bestehen, aber diese könnte auch von einer Bolzenbefestigung gebildet werden können. Auch können die Schellenhälften an beiden Seiten mit der erfindungsgemäßen Verbindung versehen sein. In wieder einer anderen Abwandlung besteht der Schellenkörper aus einem einzigen Streifen mit einer derartigen Festigkeit, daß es möglich ist, den Körper zu verbiegen, um die freien Enden aufeinanderzuzubewegen.

Der Schellenkörper besteht vorzugsweise aus Metall, aber andere Materialien sind auch möglich.

Eventuell ist in dem Schellenkörper eine elastische Einlage vorhanden, zum Beispiel aus Gummi oder Kunststoff, die zwischen dem Schellenkörper und dem Rohr vorgesehen wird. Es ist möglich, daß die Verbindungsanordnung in ihrem Passierstand gehalten wird, indem ein an dieser angeordneter Schenkel an der elastischen Einlage anliegt.

Gemäß einem dritten Aspekt der vorliegenden Erfindung wird eine Schelle nach Anspruch 14 geschaffen. Vorzugsweise ist dabei der Verbindungsvorsprung ein metallener Streifen, der mit im wesentlichen quer zu der Umfangsrichtung der Schelle gerichteten Riffelbildungen versehen ist, mit dem die Sperrmittel in Eingriff gebracht werden können.

Weitere Vorteile, Merkmale und Einzelheiten der Erfindung ergeben sich aus der nachfolgenden Beschreibung der bevorzugten Ausführungsbeispielen, sowie anhand der Zeichnung. Die Zeichnung zeigt in:
- Fig. 1: eine perspektivische Ansicht einer erfindungsgemäßen Rohrschelle;
- Fig. 2: eine Ausschnittsvergrößerung der Schelle gemäß Fig. 1 in einer perspektivischen Ansicht in aufgelösten Einzelteilen;
- Fig. 3: eine Ausschnittsvergrößerung eines anderen Ausführungsbeispiels der erfindungsgemäßen Schelle in perspektivischer Ansicht mit aufgelösten Einzelteilen;
- Fig. 4: eine schematische Darstellung einer erfindungsgemäßen Schelle in geöffnetem Stand;
- Fig. 5: eine schematische Darstellung einer erfindungsgemäßen Schelle in geschlossenem Stand;
- Fig. 6: eine schematische Darstellung eines anderen Ausführungsbeispiels einer erfindungsgemäßen Schelle;
- Fig. 7-9: schematische perspektivische Darstellungen eines Teils anderer Ausführungsbeispiele einer erfindungsgemäßen Schelle mit aufgelösten Einzelteilen;
- Fig. 10: eine schematische Seitenansicht eines Teiles eines anderen Ausführungsbeispiels der erfindungsgemäßen Schelle;
- Fig. 11a, 11b: ein schematische Perspektive eines anderen Ausführungsbeispiel einer erfindungsgemäßen Schelle, mit in Figur 11b deren Stützteil;
- Fig. 12-15: eine schematische Seitenansicht eines Teiles anderer Ausführungsbeispiele einer erfindungsgemäßen Schelle;
- Fig. 16: eine schematische Perpektive eines Teiles eines Ausführungsbeispieles einer Schelle gemäß dem zweiten Aspekt der vorliegenden Erfindung;
- Fig. 17, 18: schematische, perspektivische Ausführungsbeispiele der Schelle gemäß dem dritten Aspekt der vorliegenden Erfindung, und
- Fig. 19: ein Ausführungsbeispiel der Anlenkmittel einer erfindungsgemäßen Schelle.

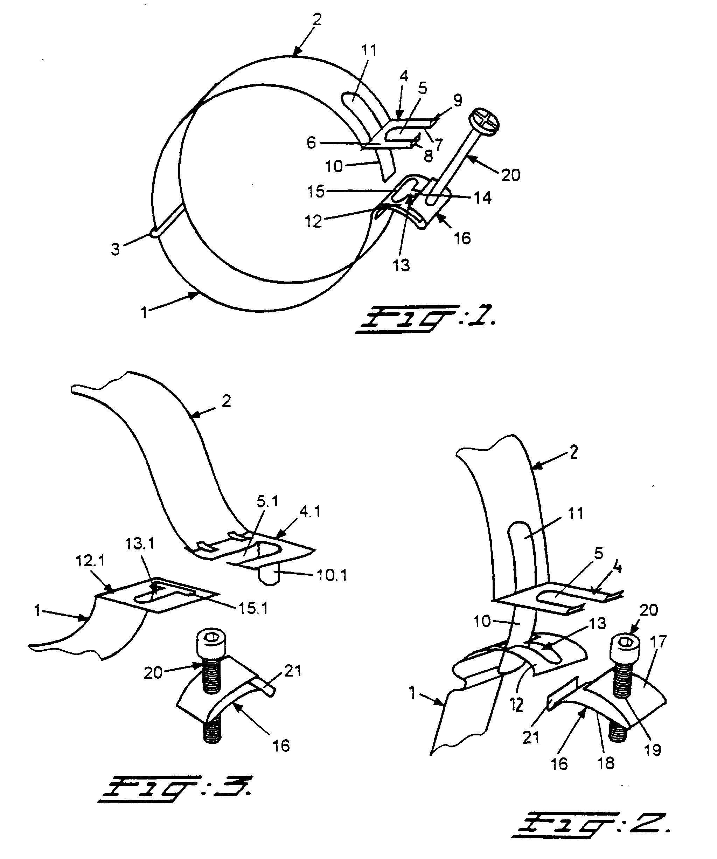

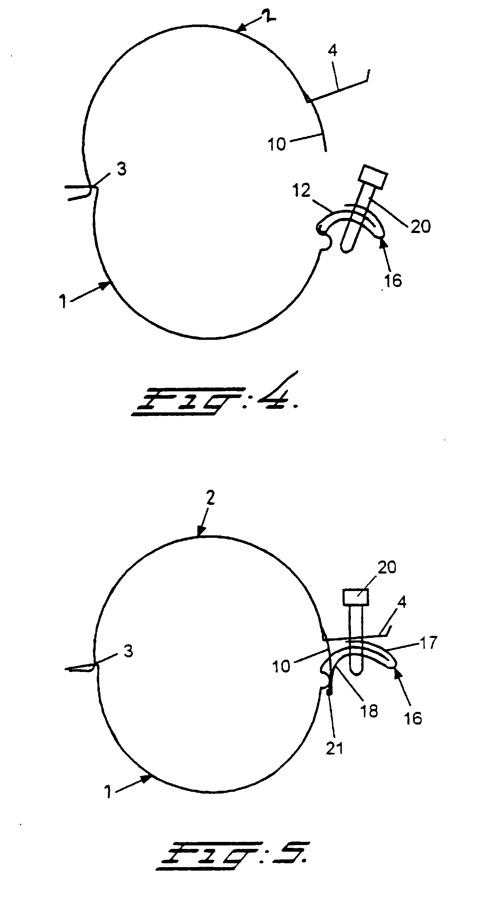

In den Figuren 1 und 2 hat eine Schelle zum Befestigen eines Rohres, einer Leitung oder dergleichen an einer Wand oder einer Decke eines Gebäudes oder an einer anderen Unterstützung, einen ringförmigen Schellenkörper, der hier aus zwei metallenen Schellenteilen 1 und 2 zusammengesetzt ist, jeweils als erstes und zweites Schellenteil bezeichnet, die an einer Seite über schematisch angegebene Gelenkmittel 3 miteinander verbunden sind. Die Gelenkmittel 3 können in vielerlei bekannten Weisen ausgeführt sein und zum Beispiel aus einer anlenkbaren Hakenverbindung zwischen beiden Schellenteilen 1, 2 bestehen. Eine mögliche Abwandlung der Gelenkmittel ist in Figur 19 gezeigt.

An dem von den Gelenkmitteln 3 abgewandten zweiten freien Ende hat das zweite Schellenteil 2 einen nach außen umgebogenen zweiten Flansch 4, in dem ein Schlitz 5 eingeformt ist. Der Schlitz 5 trennt zwei Randschenkel 6, 7 voneinander, wobei deren an dem Außenrand liegenden Enden einen von dem ersten Schellenteil 1 weg umgebogenen Randstreifen 8, bzw. 9 aufweisen.

In dem ringförmigen Teil des Schellenteils 2, in der Nähe des zweiten Flansches 4, ist aus dem metallenen Schellenteil 2 eine Zunge 10 ausgestanzt und in Richtung auf das erste Schellenteil 1 um etwa 180° umgebogen, wodurch in dem Schellenteil 2 eine entsprechende Öffnung 11 eingeformt ist.

An dem von den Gelenkmitteln 3 abgewandten ersten freien Ende des Schellenteils 1 ist ein erster Flansch 12 nach außen umgebogen, welcher erster Flansch 12 hier eine Krümmung hat, die ab dem Schellenteil 1 nach außen aufwärts und anschließend wieder abwärts verläuft. Zum Verbinden des zweiten Flansches 4 und des ersten Flansches 12 werden diese Flansche 4, 12 mit einer näher zu beschreibenden Verbindungsanordnung verbunden und zueinandergezogen, so daß in dem geschlossenen Stand der Schelle die Flansche 4, 12 nahe aneinanderliegen.

In dem ersten Flansch 12 ist eine Aussparung 13 eingeformt, die hier T-förmig, d.h. mit einem Stammteil 14 und einem Querteil 15, ausgeführt ist. Das Querteil 15 dient zum Aufnehemen der Zunge 10 beim Schließen der Schelle, wie weiter unten beschrieben werden wird.

Um den ersten Flansch 12 greift ein Stützteil 16, das in Figur 2 in Einzelheiten gezeigt ist. Dieses Stützteil 16 hat einen über dem ersten Flansch 12 liegenden oberen Schenkel 17 und einen unter dem ersten Flansch 12 liegenden unteren Schenkel 18, welche Schenkel 17, 18 in solcher Weise miteinander verbunden sind, daß das Stützteil 16 entlang dem ersten Flansch 12 schieben kann. In dem oberen Schenkel 17 ist ein Loch 19 eingeformt, durch das ein Verbindungselement, in diesem Fall ein Schraubenbolzen 20 gesteckt ist. Der Bolzen 20 ist in eine nicht näher gezeigte und mit einem Innengewinde versehene Öffnung in dem unteren Schenkel 18 geschraubt. In einer Abwandlung kann der untere Schenkel 18 zum Festhalten einer Mutter, in die der Bolzen 20 geschraubt ist, ausgelegt sein.

Der untere Schenkel 18 bildet zwischen dem Bolzen 20 und dem kreisförmigen Schellenteil 1 eine Einsteckvertiefung 21, auf die die Zunge 10 beim Schließen der Schellen angreifen kann.

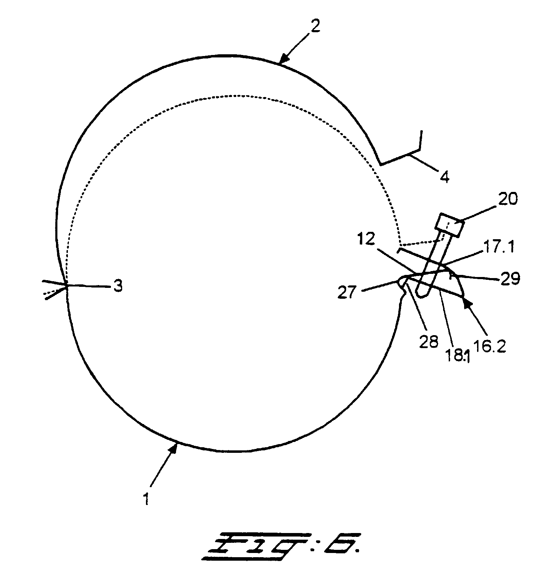

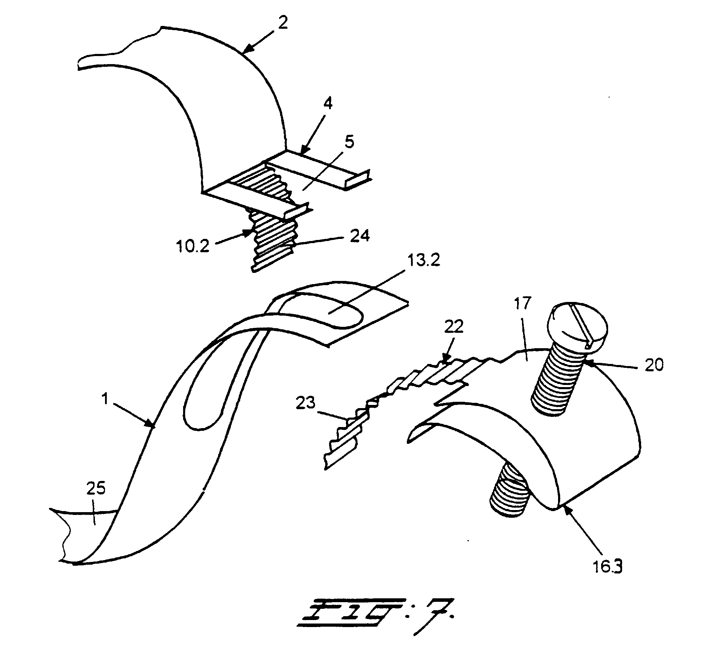

Das Stützteil 16 ist schwenkbar und unverlierbar an dem Schellenteil 1, bzw. dem ersten Flansch 12 angeordnet, weil das Stützteil 12 mit dem oberen Schenkel 17 über dem Flansch 12 liegt und mit dem unteren Schenkel 18 unter dem Flansch 12 liegt, während der Bolzen 20 durch die Aussparung 13 steckt. Das gezeigte Stützteil 16 garantiert, daß der Bolzen 20 sich - in dem geöffneten Stand der Schelle (sieh Figuren 1 und 4) - in seinem Passierstand befindet, das heißt, daß der zweite Flansch 4 entlang dem Kopf des Bolzens 20 bewegt werden kann, wobei eventuell der Bolzen von dem ersten Flansch 4 noch etwas weiter nach außen gedrückt wird.

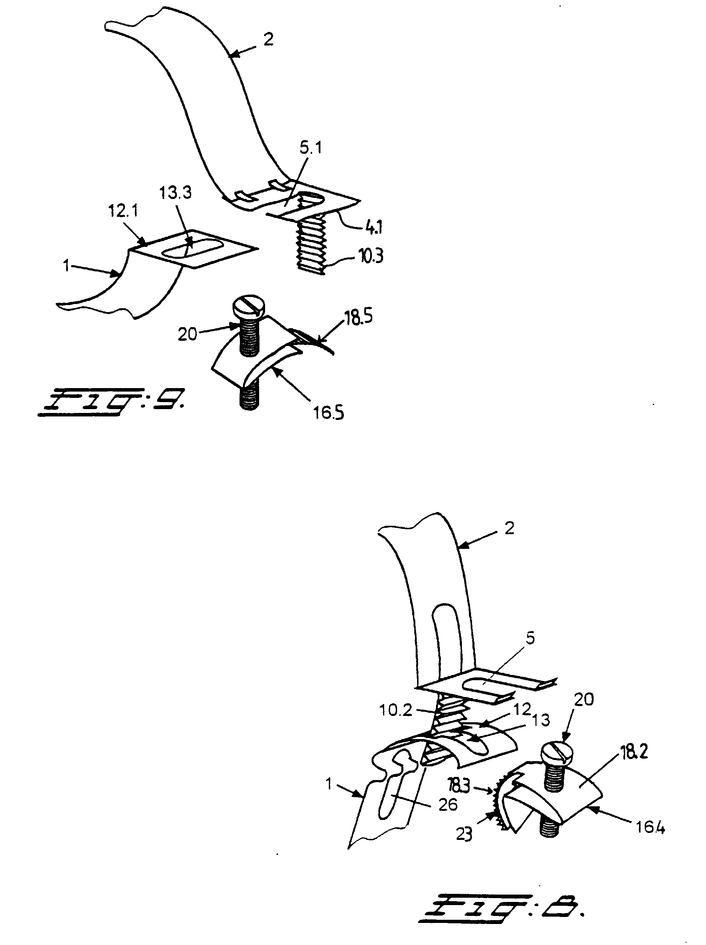

Die Wirkung der Schelle nach den Figuren 1 und 2 wird jetzt anhand der Figuren 4 und 5 näder erläutert werden.

Wenn das Schellenteil 2 in Richtung auf das Schellenteil 1 geschwenkt wird, um die Schelle um ein Rohr oder dergleichen zu schließen, steckt die Zunge 10 in dem Querteil 15 der Aussparung 13, wodurch die beiden Schellenteile zentriert werden. Anschließend gelangt die Zunge 10 in die Vertiefung 21 des Stützteils 16, so daß in Schließrichtung der Schelle eine formgeschlossene Kupplung zwischen der Zunge 10 und dem Stützteil 16 geschaffen ist. Bei dem weiteren Schließen der Schelle drückt die Zunge 10 die Vertiefung 21 von dem ersten Flansch 12 weg, so daß das Stützteil 16 entlang dem gekrümmten ersten Flansch 12 in Richtung auf das Schellenteil 1 in den in dem Figur 5 gezeigten Verbindungsstand hineinschiebt. Hierbei schwenkt sich der Bolzen 20 und kommt mit seinem Schaft in den Schlitz 5 des zweiten Flansches 4, wobei der dickere Kopf des Bolzens 20, der das Greifelement der hier gezeigten Verbindungsanordnung bildet, das von den Schenkeln 6, 7 des zweiten Flansches gebildete Auflager des Schellenkörpers hintergreift. Wenn der Stand von Figur 5 erreicht ist, kann der Bolzen 20 angezogen werden, wobei der untere Schenkel 18, der erste Flansch 12, der obere Schenkel 17 und der zweite Flansch 4 zusammengezogen werden.

Die Zunge 10 ragt vorzugsweise soweit unter dem zweiten Flansch 4 heraus, daß die Schwenkbewegung des Bolzens 20 aus dem Passierstand in den Verbindungsstand so schnell wie möglich bewirkt wird, das heißt, sobald der zweite Flansch 4 einen Stand erreicht hat, in dem der Kopf des Schraubenbolzens 20 den Flansch 4 hintergreifen kann.

In Figur 5 ist weiter ersichtlich, daß der untere Schenkel 18 in dem Verbindungsstand hinter eine an dem Schellenteil 1 angeformte Ausstülpung hakt, so daß hierdurch das Stützteil 16 in seinem Verbindungsstand verriegelt ist, auch wenn nun das zweite Schellenteil 2 wieder einigermaßen von dem ersten Schellenteil 1 wegbewegt wird. Diese Bewegungsmöglichkeit ist dann dadurch beschränkt, daß der zweite Flansch 4 dann gegen den Kopf des Bolzens 20 stößt. Eventuell können auch anders ausgeführte Rastmittel vorgesehen sein, um den Verbindungsstand des Schraubenbolzens 20 aufrechtzuerhalten.

In Figur 3 ist eine Abwandlung der Schelle nach den Figuren 1 und 2 gezeigt, bei der in Figur 3 der Schlitz 5.1 in dem zweiten Flansch 4.1 sich nicht ab dem äußeren Rand, oder der Vorderseite, des Flansches 4.1 erstreckt, sondern ab einer der Seiten des Flansches 4.1. Übrigens ist der Erfindungsgedanke auch anwendbar auf eine Ausführung, bei der der Schraubenbolzen von dem Inneren heraus aus dem Schellenkörper in einen Schlitz in dem Flansch gelangt, wie zum Beispiel aus der DE 35 43 383 bekannt ist.

Das Befestigungselement 20 und das Stützelement 16 sind in Figur 3 in im wesentlichen derselben Weise wie beim Ausführungsbeispiel nach den Figuren 1 und 2 ausgeführt. In einem ersten Flansch 12.1 des Schellenteils 1 ist die T-förmige Aussparung 13.1 aber in Querrichtung angeordnet, wobei ein Querteil an der Seite vorgesehen ist.

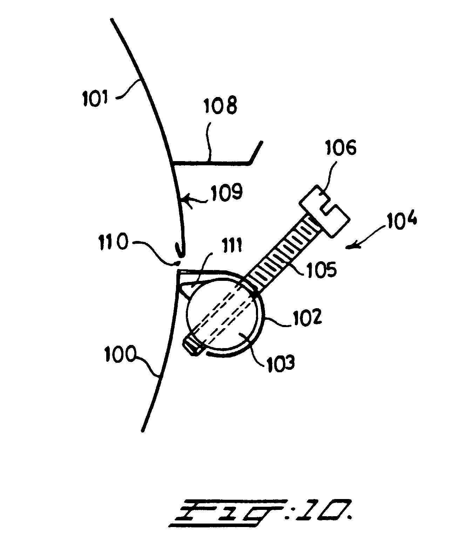

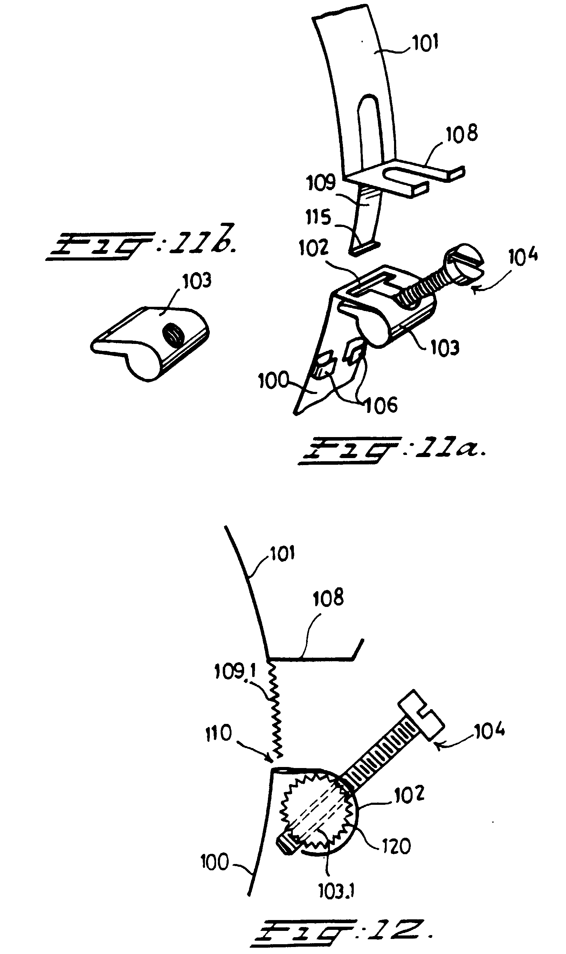

Dementsprechend befindet sich die Zunge 10.1 an der Seite des zweiten Flansches 4.1. In einfacher Weise kann die Zunge 10.1 durch das Ausstanzen und Umbiegen des Flanschteils 4.1, das den Schlitz 5.1 bildet, realisiert werden. Diese vorteilhafte Herstellungsweise des Bedienungsvorsprungs kann auch bei Schellen, wie zum Beispiel in den Figuren 1, 2 und 3 gezeigt, angewendet werden und ist auch ersichtlich in Figur 7.

Die Wirkung und Bewegung des Stützteiles 16 beim Zusammenwirken mit der Zunge 10.1 mit der Vertiefung 21 des Stützteils 16 ist dieselbe wie anhand der Figuren 1, 2, 4 und 5 beschrieben ist.

Bei dem Ausführungsbeispiel der Schelle nach Figur 6 ist an dem Schellenteil 2 kein auf das erste Schellenteil 1 gerichteter Bedienungsvorsprung angeordnet. Dagegen hat ein Stützteil 16.2 eine besondere Form. Der obere Schenkel 17.1 liegt hier nicht entlang dem ersten Flansch 12, wie in den Figuren 1 und 2, sondern ragt ab diesem nach oben in Richtung auf den zweiten Flansch 4 in dem Passierstand des Bolzens 20. Wenn das Schellenteil 2 um das Scharnier 3 in Richtung auf das Schellenteil 1 geschwenkt wird, so stößt der erste Flansch 4 gegen den in die Höhe ragenden Schenkel 17.1, der hier den an dem Stützteil 16.2 angeordneten Bedienungsvorsprung bildet, wie strichliniert angedeutet. Bei einem weiteren Schließen der Schelle drückt der zweite Flansch 4 gegen den oberen Schenkel 17.1, so daß das Stützteil 16.2 gedreht wird und das Verbindungselement 20 in den Schlitz 5 des Flansches 4 geschwenkt wird. Für eine bessere Führung des Stützteils 16.2 dient eine napfförmige Vertiefung 27, die in der Nähe des Flansches 12 in dem Schellenteil 1 eingeformt ist. In dieser napfförmigen Vertiefung 27 dreht sich ein abgerundeter Randstreifen 28 des unteren Schenkels 18.1. Für eine bessere Führung des Stützteils 16.2 um den Flansch 12 herum, kann weiter der Flansch 12 mit einem abgerundeten Rand 29 versehen sein.

In der Figur 7 ist eine Abwandlung der Schelle nach den Figuren 1 und 2 dargestellt. Hierbei is an dem Stützteil 16.3 eine Mitnehmerzunge 22 vorgesehen, die mit einer Verzahnung 23 versehen ist. Diese Zunge 22 kann mit einer Zunge 10.2 zusammenwirken, wobei diese Zunge 10.2 mit Zähnen 24 oder dergleichen versehen ist. Das Stützteil 16.3 ist mittels des durch die Öffnung 13.2 steckenden Bolzens 20 schwenkbar und unverlierbar an dem ersten Schellenteil 1 befestigt. In diesem Beispiel läuft die Aussparung 13.2 teilweise bis in den ringförmigen Teil des Schellenteils 1 weiter, so daß die Zunge 22 über eine Innenfläche 25 des Schellenteils 1 hervorsteht. Wenn sich das Schellenteil 2 in Richtung auf das Schellenteil 1 bewegt, so kommen die Zähne 24 der Zunge 10.2 in Vertiefungen zwischen den Zähnen 23 der Zunge 22 und nehmen das Stützteil 16.3 mit, so daß der Bolzen 20 in den Verbindungsstand geschwenkt wird und der Schaft des Bolzens 20 in den Schlitz 5 kommt.

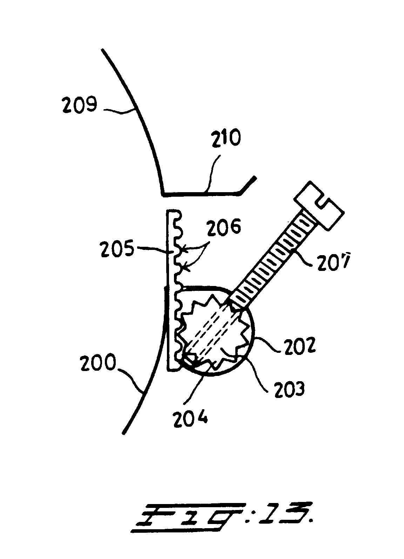

In Figur 8 ist wiederum eine Abwandlung der Schelle nach den Figuren 1 und 2 gezeigt, bei der hier an dem oberen Schenkel 18.2 des Stützteils 16.4 eine Mitnehmerzunge 18.3 mit Zähnen 23 geformt ist. Diese Zunge ragt von oben durch die Öffnung 13 und steckt dabei in ein längliches Loch 26, das in dem Schellenteil 1 eingeformt ist. Weiter ist die Zunge 10.2 mit Zähnen, die mit den Zähnen 23 der Zunge 18.3 des Stützteils 16.4 zusammenwirken können, wenn die Schelle geschlossen wird, versehen. Hierdurch wird der Bolzen 20 aus dem Passierstand in den Verbindungsstand geschwenkt.

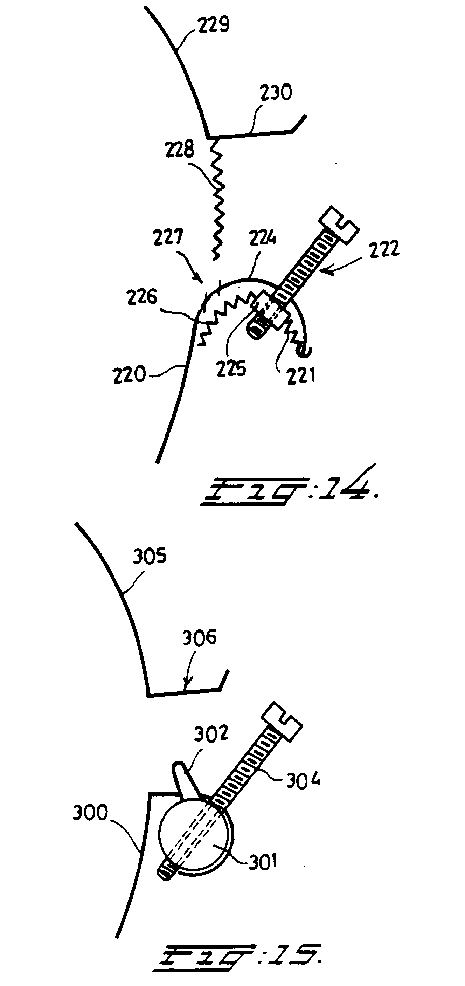

In Figur 9 ist eine Abwandlung der Schelle nach Figur 3 gezeigt, bei der der wichtigste Unterschied ist, daß die Zunge 10.3 in Figur 9 mit Zähnen oder dergleichen versehen ist und statt der Vertiefung 21 eine Zunge 18.5 mit Zähnen an dem Stützteil 16.5 angeordnet ist.

Die Zunge 10.3 ist rechtwinklig nach unten gebogen, um so beim Schließen der Schelle durch Öffnung 13.3 zu ragen und dabei in Eingriff mit der Zunge 18.5 des Stützteils 16.5 zu kommen, um den Bolzen 20 in den Verbindungsstand zu schwenken.

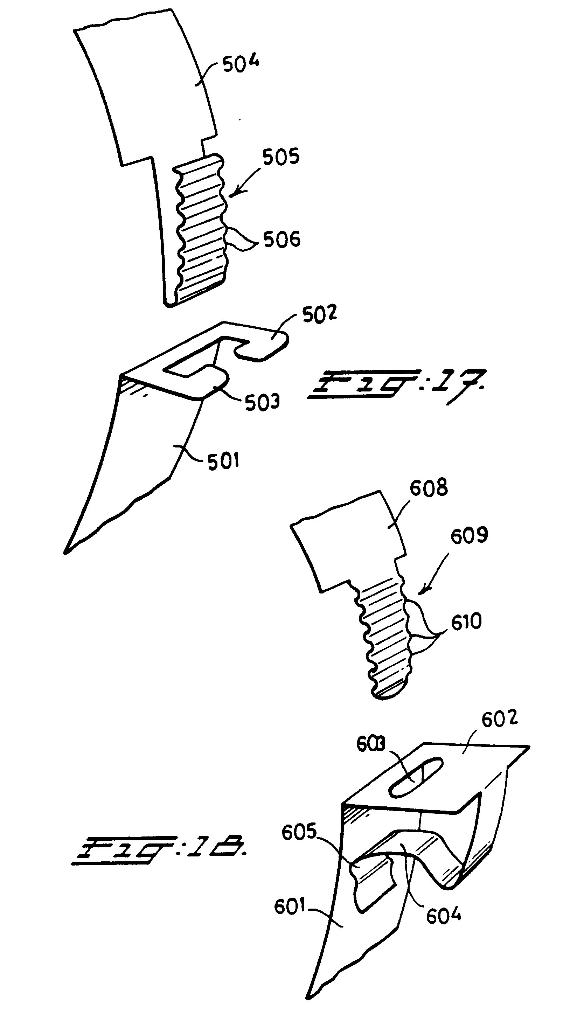

Figur 10 zeigt das erste freie Ende 100 und das zweite freie Ende 101 einer weiter nicht darzustellenden Schelle zum Befestigen eines Rohres. An dem ersten freien Ende 100 sind zwei im Abstand nebeneinander liegende und im wesentlichen kreisförmig umgebogene Lippen 102 angeordet, die ein Stützteil 103 drehbar festhalten. In dem Stützteil 103 sitzt eine mit einem Innengewinde versehene Querbohrung, in die ein Schraubenbolzen mit einem Schaft 105 und einem dickeren Bolzenkopf 106 geschraubt ist. Durch die Ausbildung der Befestigung an dem Schellenteil 104 und das in diesem drehbare Stützteil 107, kann der Bolzen 104 zwischen einem in der Figur 10 gezeigten nach außen gerichteten Passierstand und einem mehr entlang dem Schellenkörper liegenden Verbindungsstand schwenken. An dem zweiten freien Ende 101 ist ein umgebogener zweiter Flansch 108 mit einem Schlitz, wie zum Beispiel in Figur 1 gezeigt ist, gebildet. Weiter ist an dem freien Ende 101 ein Bedienungsvorsprung 109 angeformt, der unter dem Flansch 108 in Richtung auf das erste freie Ende 100 herausragt. Der Bedienungsvorsprung 109 hat eine derartige Breite, daß er beim Schließen der Schelle in der Öffnung 110 zwischen den umgebogenen Lippen 102 steckt, so daß die freien Enden 100 und 101 zueinander zentriert werden. Dabei stößt die Spitze des Vorsprungs 109 gegen einen einzigen Zahn 111, der an dem drehbaren Stützteil 103 vorgesehen ist. Dieser Zahn 111 hat einerseits die Funktion, durch Anlage an dem ringförmigen Teil des Schellenkörpers den Bolzen 20 in dem Passierstand zu halten. Andererseits dient der Zahn 111 als ein Anschlag für den Bedienungsvorsprung 109, so daß sich beim weiteren Schließen der Schelle das Stützteil 103 dreht und der Bolzen 20 in Richtung auf den Schellenkörper gezwungen wird, wobei der Kopf 106 die Schenkel des Flansches 108 hintergreift. Anschließend kann der Bolzen 104 angezogen werden, wodurch die freien Enden 100 und 101 zueinander gezogen werden.

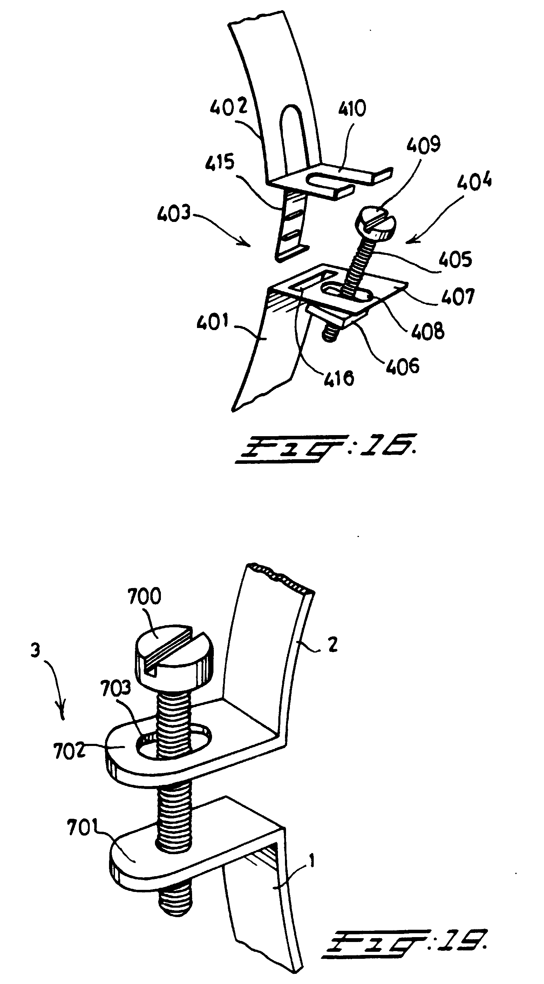

In Figur 11a ist eine Abwandlung der Schelle nach Figur 10 gezeigt, bei der der Bedienungsvorsprung 109 an seiner Spitze einen umgebogen Hakenrand 115 aufweist, der sich hinter zugehörigen Hakeneinrichtungen 106, die an dem ersten Schellenteil 100 angeordnet sind, verriegeln kann. Hierdurch wird erreicht, daß sich das zweite freie Ende 101 des Schellenkörpers nicht wieder unbeabsichtigt von dem ersten freien Ende 100 wegbewegen kann, wenn der Bolzen 104 einmal durch die Zunge 109 in seinen Verbindungsstand geschwenkt ist.

In Figur 12 ist eine Abwandlung der Schelle nach Figur 10 gezeigt, bei der das in den Lippen 102 drehbar gehaltene Stützteil 103.1 für den Bolzen 104 an seiner Außenseite statt mit dem einzigen Zahn 11, mit einer Verzahnung 120 mit mehreren Zähnen oder dergleichen versehen ist. Weiter ist der Bedienungsvorsprung 109.1 mit einer Verzahnung versehen, was mit Vorteil dadurch realisiert ist, daß der Metallstreifen, aus dem der Vorsprung 109.1 hergestellt is, mit einer Riffelung versehen ist. Beim Schließen der Schelle kommen die Zähne des Vorspungs 109.1 und des Stützteils 103.1 miteinander in Eingriff, wobei der Spalt zwischen dem Stützteil 103.1 und dem Schellenkörper so klein ist, daß der Eingriff sichergestellt ist. Durch das Schließen der Schelle wird der Bolzen 104 in den mehr entlang dem Schellenkörper liegenden Verbindungsstand schwenken und mit seinem Kopf das von den Schenkeln des Flansches 108 gebildete Auflager hintergreifen.

Anschließend kann der ßolzen 104 angezogen werden, wobei es möglich ist, daß der Vorsprung 109.1 weiter entlang den Zähnen des Stützteils 103.1 gedrückt wird. Es ist aber auch möglich, daß der Vorsprung 109.1 durch das Anziehen des Bolzen 104 zusammengedrückt wird.

In Figur 13 zeigt eine Abwandlung der Schelle nach Figur 12, bei der an dem ersten freien Ende 200 des Schellenkörpers über Lippen 202 ein drehbares Stützteil 203 befestigt ist, im wesentlichen in derselben Weise, wie anhand der Figuren 10 und 11 beschrieben ist. Das Stützteil 203 ist an seiner Außenseite mit einer Verzahnung mit Zähnen 204 versehen, die in Eingriff mit auf einem Schieber 205 angeordneten Zähnen 206 sind. Der Schieber 205 ragt in dem Passierstand des in das Stützteil 203 gebraubten Bolzens 207 ab dem ersten freien Ende 200 heraus in Richtung auf das zweite freie Ende 209 des Schellenkörpers, der hier mit einem nach außen gerichteten Flansch 210 versehen ist. Beim Schließen der Schelle drückt der Flansch 210 gegen den Kopf des Schiebers 205, der dadurch nach unten gedrückt wird und über die zusammenwirkenden Zähne das Stützteil 203 drehen läßt. Infolge dieser Tatsache schwenkt der Bolzen 207, so daß sein Kopf den Flansch 210 hintergreift.

In Figur 14 ist an dem ersten freien Ende 220 eines Schellenkörpers ein Stützteil 221 für einen Schraubenbolzen 222 befestigt, welches Stützteil 221 einen Federstahlkörper umfaßt, der auf einen Rand eines ersten Flansches 224 geklemmt ist. In dem Flansch 224 gibt es eine Schlitzöffnung zum Durchtreten des Bolzens 222. Das Stützteil 221 trägt eine Mutter 225, in die der Bolzen 222 geschraubt ist. An der Seite des ringförmigen Schellenkörpers bildet das Stützteil 221 eine Zunge 226 mit Verzahnung oder dergleichen. Weiter gibt es in dem Flansch 224 eine Öffnung 227 für eine geriffelte Zunge 228, die an dem zweiten freien Ende 229 des Schellenkörpers angeformt ist. An dem zweiten freien Ende 229 des Schellenkörpers 229 gibt es weiter einen nach außen gerichteten Flansch 230. Beim Schließen der Schelle steckt die Zunge 228 durch die Öffnung 227 und kommt dann mit ihren Riffelbildungen mit der Zunge 226 in Berührung. Beim Fortsetzen der Schließbewegung wird die Mutter 225 einwärtsgezogen und schwenkt sich der Bolzen 22, so daß dieser den Flansch 230 mit seinem Kopf hintergreift.

Figur 15 zeigt eine Abwandlung der Ausbildung nach Figur 6, bei der das Stützteil 301 selbst mit einem Bedienungsvorsprung 302 versehen ist, der mit dem nähernden zweiten freien Ende 305 des Schellenkörpers zusammenwirken kann, um das Verbindungselement 304 aus dem Passierstand heraus in den Verbindungsstand zu schwenken. In Figur 15 ist das erste freie Ende 300 mit einer Befestigung für das drehbare Stützteil 301 versehen. An dem drehbaren Stützteil 301 ist hier ein Bedienungsvorsprung 302 befestigt, der in dem Passierstand des Bolzens 304 in Richtung auf das zweite freie Ende 305 des Schellenkörpers gerichtet ist. An dem zweiten freien Ende ist ein herausragender Flansch 306 angeformt. Beim Schließen der Schelle nach Figur 15 stößt der Flansch 306 gegen den in die Höhe ragenden Bedienungsvorsprung 302, wodurch der Bolzen 304 in den Verbindungsstand schwenkt. Vorzugsweise ist der Bedienungsvorsprung 302 verformbar, so daß dieser beim Anziehen des Bolzens 306 flachgedrückt werden kann und nicht im Wege ist.

Anhand des Beispiels in Figur 16 wird nun der zweite Aspekt der vorliegenden Erfindung erläutert.

Figur 16 zeigt ein Teil einer Schelle zum Befestigen eines Rohres oder dergleichen an einer Wand, einer Decke oder einer anderen Unterstützung, welche Schelle einen Schellenkörper zum Umschließen eines Rohres umfaßt. Der Schellenkörper hat ein erstes freies Ende 401 und ein zweites freies Ende 402, die eine Öffnung 403 begrenzen, um den Schellenkörper um das Rohr anordnen zu können.

Der Schellenkörper ist in solcher Weise ausgeführt, daß ein Aufeinanderzubewegen der freien Enden 401 und 402 zum Schließen der Schelle möglich ist.

Weiter ist eine Verbindungsanordnung 404 für das lösbar Miteinanderverbinden der freien Enden 401, 402 vorgesehen, welche Verbindungsanordnung hier aus einem Schraubenbolzen 405 und einem Mutterorgan 406 besteht, in die der Bolzen 405 hineingeschraubt ist. Beim ersten freien Ende 401 des Schellenkörpers ist ein erster Flansch 407 angeordnet, mit in diesem eine Öffnung 408, durch die der Bolzen 405, mit dem Kopf 409 des Bolzens 405 an der Seite des zweiten freien Endes und dem Mutterorgan 406 an der anderen Seite des ersten Flansches 407, steckt. Die Befestigung mittels des ersten Flansches 407 und des Mutterorgans 406 ist in solcher Weise, daß der Bolzen 405 gegenüber dem Schellenkörper schwenkbar ist.

Der Kopf 409 des Bolzens 405 bildet in einem Abstand der Befestigung ein Greifelement der Verbindungsanordnung 404, die die Schenkel eines zweiten Flansches 410 hintergreifen kann, welcher zweiter Flansch 410 an dem zweiten freien Ende 402 angeformt ist. Der Bolzen 405 kann gegenüber dem Schellenkörper zwischen einem Passierstand, in dem der zweite Flansch 410 entlang dem Kopf 409 passieren kann, und einem Verbindungsstand, in dem der Kopf 409 die Schenkel des zweiten Flansches 410 hintergreift, schwenken.

Bei der Erfindung ist vorgesehen, daß der Schellenkörper bei den zu verbindenden freien Enden 401, 402 zusätzlich mit sich gegenseitig in Eingriff zu bringenden Verhakungsmitteln 415, 416 versehen ist, die neben der schwenkbaren Verbindungsanordnung 404 eine zusätzliche Verbindungsmöglichkeit zwischen den beiden freien Enden 401, 402 schaffen, welche Hakenmittel 415, 416 aneinanderhaken, wenn die freien Enden 401, 402 aufeinanderzubewegt werden.

In diesem Beispiel sind die Verhakungsmittel von einer Zunge 415 gebildet, die ab dem zweiten freien Ende unter dem zweiten Flansch 410 in Richtung auf den ersten Flansch 407 herausragt, welche Zunge 415 mit einem oder mehreren Hakenzähnen versehen ist, die den Rand einer in dem ersten Flansch 407 eingeformten Durchstecköffnung 416 für die Zunge 415 hintergreifen können.

Vorzugsweise haken diese Verhakungsmittel aneinander, sobald ein gegenseiter Abstand der freien Enden 401, 402 erreicht ist, in dem der Kopf 409 den Flansch 410 hintergreifen kann.

Vorzugsweise ist das Mutterorgan 406 federnd an dem Schellenkörper befestigt, wie an sich aus dem Stand der Technik bekannt ist, in solcher Weise, daß der Bolzen 405 in dem Verbindungsstand gegenüber dem Schellenkörper gehalten wird und beim Sichaufeinanderzubewegen der freien Enden von dem zweiten Flansch 410 zuerst seitlich geschwenkt wird, wobei die Federkraft bewirkt, daß der Bolzen 405 in den Verbindungsstand zurückschwenkt, sobald der Kopf 409 mit dem zweiten Flansch 410 in Eingriff kommen kann.

Durch die zusätzlichen Verhakungsmittel 415, 416 wird eine zuverlässige provisorische Verbindung zwischen beiden freien Enden des Schellenkörpers erreicht. In einer Abwandlung ist die Zunge 415 nicht mit Haken, sondern glatt ausgeführt und klemmt diese sich in einem beim ersten Flansch 407 angeordneten Klemmorgan fest.

Anhand der Figuren 17 und 18 wird nun das dritte Aspekt der vorliegenden Erfindung erläutert. In Figur 17 ist an dem ersten freien Ende 501 eines metallenen Schellenkörpers ein Flansch 502 mit einer Einstecköffnung 503 angeordnet, während an dem zweiten freien Ende 504 des Schellenkörpers 504 eine Zunge 505 angeformt ist, die in Richtung auf das erste freie Ende herausragt.

Die Zunge 505 ist doppelgebogen, wobei das äußerste Teil mit im wesentlichen quer zu der Umfangsrichtung des Schellenkörpers gerichteten Riffelbildungen 506 oder einer anderen Verzahnung versehen ist. Dadurch, daß beim Schließen der Schelle die Zunge 505 sich in der Öffnung 503 verriegelt, hintergreift die Zunge mit ihrer Verzahnung die Ränder der Öffnung 503 in dem Flansch 502.

In der Abwandlung nach Figur 18 ist an dem ersten freien Ende 601 des Schellenkörpers ein Flansch 602 angeformt, mit in diesem eine Öffnung 603. Der Flansch 602 ist an seinem Ende umgebogen in Richtung der kreisförmige Schellenkörper und hat dort einen unteren Schenkel 604, der mit einer Rastnase 605 an dem Schellenkörper anliegt. An dem zweiten freien Ende 608 ist eine Zunge 609 mit Zähnen 610 oder dergleichen angeformt. Beim Schließen der Schelle steckt die Zunge 609 durch die Öffnung 603 und kommt dann zwischen den ringförmigen Schellenkörper und die Rastnase 605, wodurch die Zunge 609 gesperrt ist und nicht mehr aus der Öffnung 603 gezogen werden kann.

In Figur 19 ist in nicht beschränkender Weise ein Ausführungsbeispiel der in Figur 1 schematisch angedeuteten Anlenkmittel 3 dargestellt. Hierbei sind das erste Schellenteil 1 und das zweite Schellenteil 2 jeweils mit einem Flansch 701 und 702 versehen. Ein Bolzen 700 ist in den Flansch 701 geschraubt und steckt mit großem Spiel durch ein Loch 703 in dem Flansch 702, so daß die Schellenteile 1 und 2 zueinander schwenken können.

## Patentansprüche

1. Rohrschelle zum Befestigen eines Rohres oder dergleichen an einer Wand, einer Decke oder einer anderen Unterstützung, welche Rohrschelle einen Schellenkörper zum Umschließen eines Rohres umfaßt, wobei der Schellenkörper eine von seinem ersten und seinem zweiten freien Ende begrenzte Öffnung aufweist, um den Schellenkörper um das Rohr anzuordnen und wobei der Schellenkörper ein Aufeinanderzubewegen der freien Enden zum Schließen der Rohrschelle gestattet, wobei weiter eine Verbindungsanordnung zum lösbar Miteinanderverbinden der freien Enden vorgesehen ist, welche Verbindungsanordnung beim ersten freien Ende des Schellenkörpers mit einer Befestigung des Schellenkörpers in solcher Weise verbunden ist, daß die Verbindungsanordnung gegenüber dem Schellenkörper schwenkbar ist, wobei die Verbindungseinheit im Abstand zu der Befestigung mit einem Greifelement versehen ist, das eine Auflagefläche eines beim zweiten freien Ende des Schellenkörpers vorgesehenen Auflagers hintergreifen kann, wobei die Verbindungsanordnung gegenüber dem Schellenkörper zwischen einem Passierstand, in dem das Auflager beim ersten freien Ende des Schellenkörpers entlang dem Greifelement passieren kann, und einem Verbindungsstand, in dem das Greifelement die Auflagefläche des Auflagers hintergreift, schwenken kann, **dadurch gekennzeichnet**, daß die Rohrschelle derart ausgebildet ist, daß beim Aufeinanderzubewegen der freien Enden des Schellenkörpers die sich in ihrem Passierstand befindende Verbindungsanordnung durch das zweite freie Ende des Schellenkörpers bedienbar ist und dadurch von dem Passierstand in den Verbindungsstand schwenkt, so daß das Greifelement der Verbindungsanordnung die Auflagefläche hintergreift.

2. Rohrschelle nach Anspruch 1, bei der die Verbindungsanordnung ausgelegt ist, um in deren Verbindungsstand den Abstand zwischen dem Greifelement und der Befestigung zu verringern, um beide freie Enden zueinanderzuziehen.

3. Rohrschelle nach Anspruch 1 oder 2, bei der die Verbindungsanordnung und das zweite freie Ende des Schellenkörpers in solcher Weise ausgebildet sind, daß die Verbindungsanordnung im wesentlichen in den Verbindungsstand schwenkt, sobald das Greifelement der Verbindungsanordnung die Auflagefläche hintergreifen kann.

4. Rohrschelle nach einem oder mehreren der vorhergehenden Ansprüche, bei der an dem zweiten freien Ende des Schellenkörpers ein in Richtung auf das erste freie Ende herausragender Bedienungsvorsprung angeordnet ist, der mit der Verbindungsanordnung zusammenwirken kann, um die Verbindungsanordnung aus dem Passierstand heraus in den Verbindungsstand zu schwenken.

5. Rohrschelle nach einem oder mehreren der vorhergehenden Ansprüche, bei der die Verbindungsanordnung, vorzugsweise in dem Gebiet des ersten freien Endes, mit einem in Richtung auf das zweite freie Ende des Schellenkörpers herausragenden Bedienungsvorsprung versehen ist, der mit dem zweiten freien Ende zusammenwirken kann, um die Verbindungsanordnung aus dem Passierstand heraus in den Verbindungsstand zu schwenken.

6. Rohrschelle nach einem oder mehreren der vorhergehenden Ansprüche, bei der die Verbindungsanordnung einen Schraubenbolzen und ein zugehöriges Stützteil umfaßt, wobei der Schraubenbolzen in das Stützteil geschraubt ist, welches Stützteil über die Befestigung schwenkbar an dem ersten freien Ende des Schellenkörpers befestigt ist.

7. Rohrschelle nach Anspruch 3, bei der der Schellenkörper beim ersten freien Ende mit einer Durchstecköffnung für den Bedienungsvorsprung versehen ist.

8. Rohrschelle nach Anspruch 3, bei der der Bedienungsvorsprung und die Verbindungsanordnung mit einer zusammenwirkenden Verzahnung mit einem oder mehreren Zähnen versehen sind.

9. Rohrschelle nach Anspruch 3, bei der Rastmittel vorgesehen sind, die den an dem zweiten freien Ende vorgesehenen Bedienungsvorsprung an dem zu dem ersten freien Ende zugehörigen Teil des Schellenkörpers verriegeln, wenn die Verbindungsanordnung in den Verbindungsstand geschwenkt ist.

10. Rohrschelle nach Anspruch 1, bei der die Verbindungsanordnung einen beim ersten freien Ende angeordneten Schieber umfaßt, der verschiebbar zu dem Schellenkörper geführt ist, welcher Schieber beim Aufeinanderzubewegen der freien Enden von dem zweiten freien Ende versetzt wird, und dadurch das Greifelement in den Verbindungsstand schwenkt.

11. Rohrschelle zum Befestigen eines Rohres oder dergleichen an einer Wand, einer Decke oder einer anderen Unterstützung, welche Rohrschelle einen Schellenkörper zum Umschließen eines Rohres umfaßt, wobei der Schellenkörper eine von seinem ersten und seinem zweiten freien Ende begrenzte Öffnung aufweist, um den Schellenkörper um das Rohr anzuordnen und wobei der Schellenkörper ein Aufeinanderzubewegen der freien Enden zum Schließen der Rohrschelle gestattet, wobei weiter eine Verbindungsanordnung zum lösbar Miteinanderverbinden der freien Enden vorgesehen ist, welche Verbindungsanordnung beim ersten freien Ende des Schellenkörpers in solcher Weise mit einer Befestigung des Schellenkörpers verbunden ist, daß die Verbindungsanordnung gegenuber dem Schellenkörper schwenkbar ist, wobei die Verbindungsanordnung in einem Abstand zu der Befestigung mit einem Greifelement versehen ist, das eine Auflagefläche eines beim zweiten freien Ende des Schellenkörpers vorgesehen Auflagers hintergreifen kann, wobei die Verbindungsanordnung gegenüber dem Schellenkörper zwischen einem Passierstand, in dem das Auflager beim ersten freien Ende des Schellenkörpers entlang dem Greifelement passieren kann, und einem Verbindungsstand, in dem das Greifelement die Auflagefläche des Auflagers hintergreift, schwenken kann, **dadurch gekennzeichnet**, daß der Schellenkörper bei den zu verbindenden freien Enden zusätzlich mit Verhakungsmitteln, die neben der schwenkbaren Verbindungsanordnung eine zusätzliche Verbindung zwischen den beiden freien Enden schaffen, versehen ist.

12. Rohrschelle nach Anspruch 11, bei der die Hakenmittel aneinanderhaken, sobald beim Schließen der Rohrschelle ein gegenseitiger Stand der freien Enden erreicht ist, in dem das Greifelement die Auflagefläche hintergreifen kann.

13. Rohrschelle nach Anspruch 11 oder 12, bei der die Verbindungsanordnung in solcher Weise federnd an dem Schellenkörper befestigt ist, daß die Verbindungsanordnung in dem Verbindungsstand gegenüber dem Schellenkörper gehalten wird und beim Aufeinanderzubewegen der freien Enden von dem zweiten freien Ende in den Passierstand geschwenkt wird, wobei die Federkraft bewirkt, daß die Verbindungsanordnung in die Verbindungsstand schwenkt, sobald das Greifelement in Eingriff mit dem Auflager kommen kann.

14. Rohrschelle zum Befestigen eines Rohres oder dergleichen an einer Wand, einer Decke oder einer anderen Unterstützung, welche Rohrschelle einen Schellenkörper zum Umschließen eines Rohres umfaßt, wobei der Schellenkörper eine von seinem ersten und seinem zweiten freien Ende begrenzte Öffnung aufweist, um den Schellenkörper um das Rohr anzuordnen und wobei der Schellenkörper ein Aufeinanderzubewegen der freien Enden zum Schließen der Rohrschelle gestattet, wobei weiter eine Verbindungsanordnung zum lösbar Miteinanderverbinden der freien Enden vorgesehen ist, **dadurch gekennzeichne**t, daß an dem zweiten freien Ende des Schellenkörpers ein Verbindungsvorsprung angeformt ist, der sich in Richtung aus das erste freie Ende erstreckt, und daß an dem ersten freien Ende des Schellenkörpers ein Flansch vorgesehen ist, mit in diesem eine Öffnung, durch die der Verbindungsvorsprung hindurchstecken kann, wobei Sperrmittel zum Festsetzen des Verbindungsvorsprungs in den durch die Öffnung des Flansches ragenden Stand vorgesehen sind.

15. Rohrschelle nach Anspruch 14, bei der der Verbindungsvorsprung mit im wesentlichen quer zu der Umfangsrichtung des Schellenkörpers gerichteten Riffelbildungen, mit denen die Sperrmittel in Eingriff gebracht werden können.
